**Europäisches Patentamt**

**European Patent Office**

**Office européen des brevets**

(19)

(11) Veröffentlichungsnummer: **0 229 905**
**B1**

(12) # EUROPÄISCHE PATENTSCHRIFT

(45) Veröffentlichungstag der Patentschrift:
22.08.90

(51) Int. Cl.⁵: **B60R 21/20**

(21) Anmeldenummer: **86115435.9**

(22) Anmeldetag: **07.11.86**

(54) Aufblasbares Aufprallschutzkissen und Verfahren zu seiner Herstellung.

(30) Priorität: **14.12.85 DE 3544248**

(43) Veröffentlichungstag der Anmeldung:
**29.07.87 Patentblatt 87/31**

(45) Bekanntmachung des Hinweises auf die Patenterteilung:
**22.08.90 Patentblatt 90/34**

(84) Benannte Vertragsstaaten:
**DE ES FR GB IT**

(56) Entgegenhaltungen:
DE-A- 2 322 629
FR-A- 2 219 034
US-A- 4 300 894

(73) Patentinhaber: **AUDI AG,
Auto-Union-Strasse 1 Postfach 220,
D-8070 Ingolstadt(DE)**

(72) Erfinder: **Backhaus, Hans-Gerd, Dipl.-Ing.,
Siedlungsstrasse 15, D-8071 Wettstetten(DE)**
Erfinder: **Bendig, Udo, Eichenstrasse 3,
D-8071 Wettstetten(DE)**

(74) Vertreter: **Le Vrang, Klaus, AUDI AG
Postfach 220 Patentabteilung I/EQP,
D-8070 Ingolstadt(DE)**

## Beschreibung

Die Erfindung betrifft ein aufblasbares Aufprallschutzkissen gemäß Oberbegriff des Patentanspruches 1 und ein Verfahren zu seiner Herstellung.

Aufprallschutzkissen gemäß Gattungsbegriff werden vorwiegend in Personenkraftfahrzeuge eingebaut und dienen dort den Fahrzeuginsassen als Sicherheitseinrichtung, insbesondere bei einem Frontalzusammenstoß mit einem Hindernis oder einem entgegenkommenden Kraftfahrzeug.

In der Ruheposition ist das Aufprallschutzkissen zusammengefaltet in einem Behälter untergebracht, der im Bereich des Armaturenbrettes, des Lenkrades oder, wenn es auf dem Rücksitz sitzende Fahrzeuginsassen schützen soll, an der Rückseite der Vordersitz-Rückenlehne angebracht ist.

Erfolgt nun ein Aufprall auf ein Hindernis so wird eine Druckgasquelle eingeschaltet, welche praktisch schlagartig das Aufprallschutzkissen aufbläst und dieses in eine Schutzposition zwischen dem Fahrzeuginsassen und einem vor ihm befindlichen und eventuelle Verletzungen verursachenden Bauelement des Kraftfahrzeuges bringt.

Für die Wirkung des Aufprallschutzkissens ist dabei von entscheidender Bedeutung, daß dieses aus seiner gefalteten in die aufgeblasene, ein großes Volumen einnehmende Position in äußerst kurzer Zeit bringbar ist, gleichzeitig soll es aber in seiner gefalteten Ruheposition ausgesprochen platzsparend sein, so daß das zu seiner Aufnahme vorgesehene Gehäuse auch wiederum nur entsprechend klein dimensioniert sein muß.

Als Stand der Technik sind nun beispielsweise trommelähnlich geformte Aufprallschutzkissen bekannt (DE-A 27 22 551), die aber insbesondere wegen der erforderlichen Stirnflächen nur schwerlich gleichmäßig faltbar sind und überdies aufgrund der Stirnflächen einen relativ großer Materialverschnitt bei der Herstellung verursachen. Weiterhin sind vorwiegend kreisförmig geformte, in aufgeblasenem Zustand aber wenig raumgreifende, kissenähnliche Aufprallschutzkissen bekannt (DE-A 25 36 933), die sich zwar einigermaßen zusammenfalten lassen aber bei der Herstellung wiederum sehr große Materialverluste entstehen lassen. Darüberhinaus gibt es noch mehr oder weniger körpergerecht geformte Aufprallschutzkissen (DE-A 25 28 636, DE-AS 25 29 602), bei denen von einem eckigen Zuschnitt ausgegangen wird, die aber meist sehr viele Nahtstellen aufweisen und daher in der Herstellung relativ kompliziert sind und insbesondere nach dem Zusammenfalten einen doch recht großen Platzbedarf haben. Dazu gehören auch die in den Deutschen Offenlegungsschriften DE-A 23 22 629 und 22 24 827 offenbarten Aufprallschutzkissen, die zwar in einer flach ausgebreiteten Ruheposition eine in etwa viereckige Form mit zueinander deckungsgleichen Prallflächen aufweisen, bei denen aber u. a. die, die endgültige Form bestimmenden Nahtstellen ein raumsparendes Zusammenfalten verhindern.

Davon ausgehend ist es die Aufgabe der vorliegenden Erfindung, ein Aufprallschutzkissen aufzuzeigen, welches einerseits praktisch ohne, oder mit zumindest außerordentlich geringen Materialverlusten herstellbar ist, sich sehr gut und gleichmäßig auf kleinsten Raum zusammenfalten läßt, und andererseits im aufgeblasenen Zustand ein in seine Wirkrichtung gehendes großes Volumen einnimmt.

Diese Aufgabe wird durch ein gattungsgemäßes aufblasbares Aufprallschutzkissen (insbesondere nach DE-A 2 322 629) gelöst, das die kennzeichnenden Merkmale des Patentanspruches 1 aufweist. Besonders vorteilhafte Herstellungsverfahren werden in den Patentansprüchen 10 bis 12 angegeben.

Weitere wesentliche Vorteile sind der nachstehenden Figurenbeschreibung entnehmbar, in der das erfindungsgemäße Aufprallschutzkissen anhand abgebildeter Ausführungsbeispiele erläutert wird.

In der Zeichnung zeigt:

Figur 1 eine Fahrzeugseitenansicht mit Insasse und aufgeblasenem, erfindungsgemäß ausgestaltetem Aufprallschutzkissen,

Figur 2 einen Schnittplan einer Materialbahn zur Herstellung eines Aufprallschutzkissens mit rechteckigen Prallflächen und Seitenflächen,

Figur 3 den Ablauf des Faltens bei dessen Herstellung,

Figur 4 einen Schnittplan einer Materialbahn zur Herstellung eines Aufprallschutzkissens mit trapezförmigen Prallflächen und rechteckigen Seitenflächen,

Figur 5 ein Faltschema zu dessen Herstellung und

Figuren 6 bis 9 Schnittpläne und Faltschemata zur Herstellung von Aufprallschutzkissen mit trapezförmigen Prallflächen und Seitenflächen mit unterschiedlichen oberen und unteren Breiten.

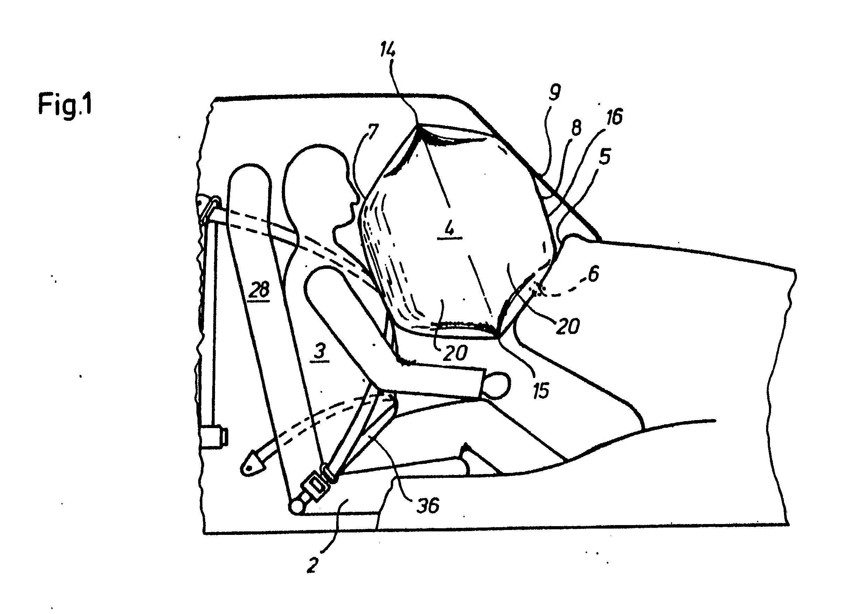

Figur 1 zeigt einen Ausschnitt aus der vorderen Sitzreihe eines Kraftfahrzeuges, aus der die ungefähre Lage und das Zusammenwirken zwischen einem auf einem Fahrer- bzw. Beifahrersitz 2 sitzenden Fahrzeuginsasse 3 und einem bereits aufgeblasenem Aufprallschutzkissen 4 hervorgeht, welches so zwischen Fahrzeuginsasse 3 und dem Armaturenbrett 5 angeordnet ist, daß dadurch die Verletzungsgefahr des, auch bei angelegtem Sicherheitsgurt 36, bei einem Frontalzusammenstoß nach vorne schleudernden Fahrzeuginsassen 3 gemindert wird. Eine Gaseinlaßöffnung 6, über die ein Füllgas schlagartig in das Aufprallschutzkissen 4 geblasen wird, sowie ein Behälter (nicht dargestellt) zur Aufbewahrung in zusammengefaltetem Ruhezustand sind im Bereich des Armaturenbrettes 5 untergebracht. Es ist in dieser Darstellung deutlich erkennbar, wie eine hintere Prallfläche 7 dem Fahrzeuginsassen 3 zugewandt ist, während eine vordere Prallfläche 8 sich am Armaturenbrett 5 selbst, sowie teilweise an einer Windschutzscheibe 9 abstützt. Ebenfalls deutlich erkennbar ist die sehr raumgreifende, in die Tiefe gehende Form des aufgeblasenen Aufprallschutzkissens 4, so daß es dadurch möglich ist, den Druck des Füllgases etwas geringer zu halten, um dadurch die Aufprallwirkung für den Fahrzeuginsassen 3 zu mindern.

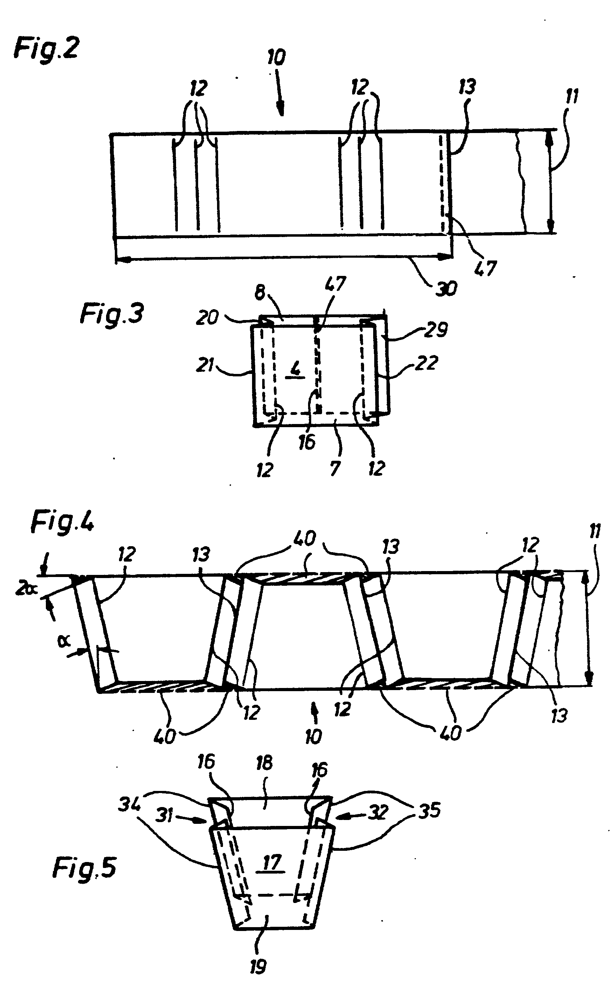

Ausgangspunkt zur Herstellung ist eine Materialbahn 10, wie sie in Figur 2 dargestellt ist. Es entsteht dabei ein Aufprallschutzkissen 4, das in seiner nichtaufgeblasenen, flach ausgebreiteten Ruheposition rechteckig ist, wobei die Breite 11 der Materialbahn l0 der Höhe des Aufprallschutzkissens 4 entspricht. Die Faltlinien 12 sowie die Längsschnittlinie 13 zeigen, daß ohne Materialverlust bei der Herstellung gearbeitet werden kann.

Figur 3 zeigt hierzu das Faltschema zur Weiterbearbeitung des Materialbahnabschnittes, dessen Länge (30) zuzüglich einer Überlappung (47) der Summe der Breiten der beiden Prallflächen 7, 8 und von zwei Seitenflächen 20, 29 entspricht. Dabei sind insgesamt drei Naht- oder Klebestellen, nämlich eine obere und untere Quernaht 14, 15 (Fig. 1) sowie eine Längsnaht 16 erforderlich wobei letztere vorzugsweise in den Bereich der vorderen Prallfläche 8 gebracht wird. Es sind selbstverständlich auch andere in der Praxis geläufige, Nähte herstellende Verbindungstechniken denkbar. Damit besteht das Aufprallschutzkissen 4 in einer flach ausgebreiteten Ruheposition praktisch aus zwei zueinander deckungsgleichen Prallflächen 7, 8, wobei sich an deren jeweils linken und rechten Längskanten 21, 22 die zusätzlichen, nach innen eingelegten Seitenflächen 20, 29 anschließen und diese zusammen mit den oberen und unteren, die Prallflächen 7, 8 verbindenden Quernähten 14, 15 vernäht bzw. verklebt werden. Im aufgeblasenen Zustand bewirken dann die Seitenflächen 20, 29, die jeweils noch eine vertikale, mittig liegende Faltlinie 12 aufweisen eine wesentliche Volumenvergrößerung in Richtung des zu dämpfenden Aufpralls.

Die Figur 4 zeigt den Faltlinien- bzw. Schnittlinienverlauf der Materialbahn 10 bei der Herstellung eines Aufprallschutzkissens 17 mit, in nichtaufgeblasenem Ruhezustand trapezförmiger Außenkontur. Damit soll insbesondere die Schutzwirkung im Kopfbereich des Fahrzeuginsassen 3 erhöht werden, ohne dadurch das Aufprallschutzkissen 17 insgesamt zu voluminös werden zu lassen. Hier kann mit ausgesprochen geringem Verschnitt 40 gearbeitet werden. Je ein Materialbahnabschnitt bildet dabei eine vordere bzw. hintere Prallfläche 18, 19, an deren linken und rechten Längskanten 34, 35 sich eine rechteckige Seitenfläche 31, 32 anschließt. Letztendlich entstehen dabei gemäß Faltschema nach Figur 5 zwei übereinanderliegende Teilstücke, wobei bei deren Zusammenfügen obere und untere, die Prallflächen 18, 19 verbindende Quernähte, entsprechend der Ausführung nach Figur 3 und zwei Längsnähte 16 erforderlich sind. Auch hier sind natürlich wiederum auch andere Verbindungstechniken einsetzbar.

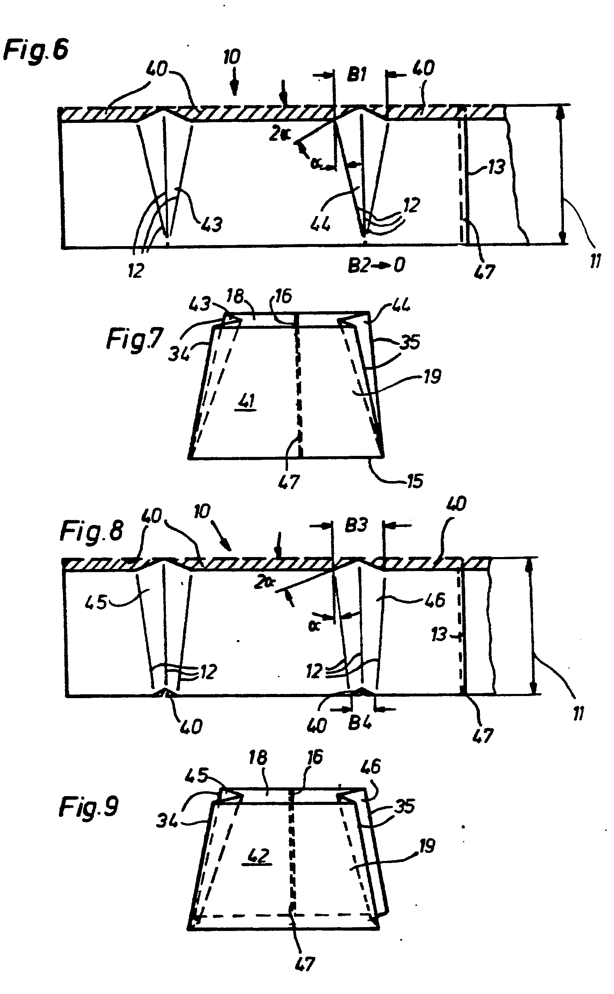

Die Ausführungsformen nach den Figuren 6 bis 9 zeigen Schnittpläne und Faltschemata für weitere trapezförmige Aufprallschutzkissen 41, 42, wobei die, jeweils eine mittig verlaufende Faltnaht 12 aufweisende Seitenflächen 43 - 46 unterschiedliche obere und untere reiten aufweisen, so daß eine Anpassung an gegebene Erfordernisse ohne weiteres möglich ist. Dabei ist "oben" bzw. "unten" willkürlich gewählt und kann beim Einbau des Aufprallschutzkissens 41, 42 in das Kraftfahrzeug selbstverständlich ohne weiteres vertauscht werden.

In der Ausführungsform nach Figur 6 laufen die Faltlinien 12 der Seitenflächen 43, 44 im Bereich der unteren Quernaht 15 zusammen so daß die untere Breite B2 gegen 0 geht.

Auch hier kann aus einem Materialbahnabschnitt heraus gefertigt werden, wobei dessen Länge etwa der Summe der mittleren Breiten von Prall- und Seitenflächen 18, 19, 43 - 46 entspricht und die eine Längsnaht 16 in den Bereich der vorderen, dem Fahrzeuginsassen abgewandten Prallfläche 18 zu liegen kommt. Der Verschnitt 40 (schattierte Fläche) ist minimal und ergibt sich im wesentlichen aufgrund der gewählten Trapezform (Trapezwinkel α).

Für die Festigkeit, d. h. Haltbarkeit der Längs- und Quernähte 14 - 16 empfiehlt es sich, die zu verbindenden Materialabschnitte zu überlappen (Überlappung 47) und/oder zusätzlich zu falzen. Es ist weiterhin denkbar, und insbesondere bei der Ausführungsform gemäß Figuren 2 und 3 ohne weiteres ausführbar, die beiden Seitenflächen 20, 29 unterschiedlich breit zu gestalten. Dadurch könnte eine eventuelle Asymmetrie, beispielsweise des Armaturenbrettes 5, dahingehend ausgeglichen werden, daß letztendlich die dem Fahrzeuginsassen 3 zugewandte Prallfläche 7 des aufgeblasenen Aufprallschutzkissens 4 eine zur Aufprallrichtung senkrecht liegende Ebene bildet und so ein seitliches Abrutschen des Fahrzeuginsassen 3 verhindert.

Außerdem sind weitere Kombinationen der gezeigten Prallflächen- und Seitenflächenformen im Rahmen der durch den Hauptanspruch offenbarten Erfindung denkbar.

Als Ausgangsmaterial für die Herstellung des Aufprallschutzkissens 4, 17, 41, 42 kann vorzugsweise eine mit gasundurchlässigem Kunstharz beschichtete Gewebebahn verwendet werden. Bei der Verarbeitung ist es zweckmäßig, zuerst die Längsnaht und danach die Quernähte herzustellen. Weitere Arbeitsschritte können unmittelbar den Figuren entnommen werden. Abwandlungen bei der Vorgehensweise sind ohne weiteres denkbar.

Zwecks Unterbringung des Aufprallschutzkissens 4, 17, 41, 42 in einem Behälter im Bereich des Armaturenbrettes 5 oder, für die hinteren Fahrzeuginsassen, im Bereich der Rückenlehne 28 des Fahrer- bzw. Beifahrersitzes 2 empfiehlt sich ein Zusammenfalten, vorzugsweise rechtwinklig zu den Längs- und/oder Querkanten, so daß es in zusammengefaltetem Zustand unmittelbar vor der Gaseinlaßöffnung 6 zu liegen kommt. Dadurch wird ein schneller und gleichmäßiger Füllvorgang begünstigt.

**Patentansprüche**

1. Aufblasbares Aufprallschutzkissen (4) für Kraftfahrzeuge zum Schutz eines Fahrzeuginsassen (3) beim Aufprall des Kraftfahrzeuges auf ein Hindernis, wobei das Aufprallschutzkissen in einer flach ausgebreiteten Ruheposition eine im wesentlichen viereckige Form mit zueinander deckungsgleichen Prallflächen (7, 8) aufweist, **dadurch gekennzeichnet**, daß die Prallflächen (7 und 8 bzw. 18 und 19) an den beiden etwa in Aufblasrichtung verlaufenden Seitenkanten (21 und 22 bzw. 34 und 35) durch nach innen zwischen die Prallflächen (7 und 8 bzw. 18 und 19) gefaltete Seitenflächen (20 und 29 bzw. 31 und 32 bzw. 43 - 46) verbunden sind, deren freie Kanten zusammen mit den beiden etwa quer zur Aufblasrichtung verlaufenden Kanten (14 und 15) verbunden sind.

2. Aufblasbares Aufprallschutzkissen nach Anspruch 1, **dadurch gekennzeichnet**, daß dessen Prallflächen (7 und 8) und Seitenflächen (20 und 29) rechteckige Außenkonturen aufweisen.

3. Aufblasbares Aufprallschutzkissen nach Anspruch 1, **dadurch gekennzeichnet**, daß dessen Prallflächen (18, 19) eine trapezförmige Außenkontur aufweisen.

4. Aufblasbares Aufprallschutzkissen nach Anspruch 3, **dadurch gekennzeichnet**, daß die Seitenflächen (31, 32) rechteckig sind und sich aus jeweils zwei, mittels Längsnähten (16) verbundenen Seitenflächenhälften zusammensetzen.

5. Aufblasbares Aufprallschutzkissen nach Anspruch 3, **dadurch gekennzeichnet**, daß die Seitenflächen (43 bis 46) unterschiedliche obere und untere Breiten (B1 bis B4) aufweisen.

6. Aufblasbares Aufprallschutzkissen nach Anspruch 5, **dadurch gekennzeichnet**, daß die Faltlinien (12) der Seitenflächen (43 und 44) im Bereich einer unteren Kante (15) zusammenlaufen, so daß die untere Breite (B2) gegen 0 geht.

7. Aufblasbares Aufprallschutzkissen nach Anspruch 2, **dadurch gekennzeichnet**, daß die linken und rechten Seitenflächen (21, 29) unterschiedlich breit sind.

8. Aufblasbares Aufprallschutzkissen nach Anspruch 2, **dadurch gekennzeichnet**, daß die Höhe der Prallflächen (7 und 8) der Breite (11) einer zu ihrer Herstellung verwendeten Materialbahn (10) entspricht.

9. Aufblasbares Aufprallschutzkissen nach einem oder mehreren der Ansprüche 1 - 8, **dadurch gekennzeichnet**, daß das Aufprallschutzkissen (4 bzw 17 bzw 41 bzw 42) zum Verbringen in einen Behälter mehrfach parallel zu den Außenkanten (14 und 15 bzw. 21 und 22 bzw 34 und 35) seiner Prallflächen (7 und 8 bzw. 18 und 19) faltbar ist.

10. Verfahren zur Herstellung eines aufblasbaren Aufprallschutzkissens nach Patentanspruch 1, **dadurch gekennzeichnet**, daß eine Materialbahn (10) verwendet wird, deren Breite (11) der Höhe des Aufprallschutzkissens (4) entspricht, daß für ein Aufprallschutzkissen (4) mit rechteckigen Außenkonturen von Prallflächen (7, 8) und Seitenflächen (20, 29) aus der Materialbahn (10) ein Teilstück mit einer Länge (30) geschnitten wird, die, zuzüglich einer Überlappung (47), der Summe der Breiten der Prallflächen (7, 8) und der Seitenflächen (20, 29) entspricht, daß nach dem Falten gemäß den Faltlinien (12) zunächst die eine, vorzugsweise im Bereich der vorderen Prallfläche (8) liegende Längsnaht (16) und danach die obere und untere Quernaht (14, 15) hergestellt werden.

11. Verfahren zur Herstellung eines aufblasbaren Aufprallschutzkissens nach Patentanspruch 1, **dadurch gekennzeichnet**, daß für ein Aufprallschutzkissen (17) mit trapezförmiger Außenkontur der Prallflächen (18, 19) und rechteckigen Seitenflächen (31, 32) aus der Materialbahn (10) zwei trapezförmige Teilstücke in der Weise geschnitten werden, daß jedes Teilstück eine Prallfläche (18 bzw. 19) sowie eine links- und eine rechtsseitige hälftige Seitenfläche (31 bzw. 32 einschließt, daß nach dem Falten gemäß den Faltlinien (12) und Entfernen des Verschnittes (40) beide Teilstücke deckungsgleich übereinandergelegt, die beiden, die hälftigen Seitenflächen (31 und 32) verbindenden Längsnähte (16) und danach die obere und untere Quernaht (14 und 15) hergestellt werden.

12. Verfahren zur Herstellung eines aufblasbaren Aufprallschutzkissens nach Patentanspruch 1, **dadurch gekennzeichnet**, daß für ein Aufprallschutzkissen (41 bzw. 42) mit trapezförmiger Außenkontur der Prallflächen (18 bzw. 19) und mit Seitenflächen (43 bis 46) mit unterschiedlichen oberen und unteren Breiten (81 bis 84) aus einer Materialbahn (10) ein Teilstück mit einer Länge (30) geschnitten wird, die, zuzüglich einer Überlappung (47), etwa der Summe der mittleren Breiten von Prall- und Seitenflächen (18 und 19 bzw. 43 bis 46) entspricht, daß nach dem Falten gemäß den Faltlinien (12) und Entfernen des Verschnittes (40) zunächst die eine, vorzugsweise im Bereich der vorderen Prallfläche (18) liegende Längsnaht (16) und danach die obere und untere Quernaht (14 bzw. 15) hergestellt werden.

**Claims**

1. Inflatable collision-protection cushion (4) for motor vehicles for protecting a vehicle occupant (3) in the event of the motor vehicle colliding with an obstacle, the collision-protection cushion, when spread out flat in a rest position, having an essentially quadrilateral shape with impact surfaces (7, 8) congruent with one another, characterized in that the impact surfaces (7 and 8 or 18 and 19), at the two lateral edges (21 and 22 or 34 and 35) running approximately in the inflation direction, are connected by lateral surfaces (20 and 29 or 31 and 32 or 43–46) which are folded inwards between the impact surfaces (7 and 8 or 18 and 19) and whose free edges are connected to the two edges (14 and 15) running approximately transversely to the inflation direction.

2. Inflatable collision-protection cushion according to Claim 1, characterized in that its impact surfaces (7 and 8) and lateral surfaces (20 and 29) have rectangular outer contours.

3. Inflatable collision-protection cushion according to Claim 1, characterized in that its impact surfaces (18, 19) have a trapezoidal outer contour.

4. Inflatable collision-protection cushion according to Claim 3, characterized in that the lateral surfaces (31, 32) are rectangular and each is composed of two lateral-surface halves connected by means of longitudinal seams (16).

5. Inflatable collision-protection cushion according to Claim 3, characterized in that the lateral surfaces (43 to 46) have different upper and lower widths (B1 to B4).

6. Inflatable collision-protection cushion according to Claim 5, characterized in that the fold lines (12) of the lateral surfaces (43 and 44) converge in the area of a lower edge (15) so that the lower width (B2) approaches 0.

7. Inflatable collision-protection cushion according to Claim 2, characterized in that the left hand and right hand lateral surfaces (21, 29) are of different widths.

8. Inflatable collision-protection cushion according to Claim 2, characterized in that the height of the impact surfaces (7 and 8) corresponds to the width (11) of a web (10) of material used to manufacture them.

9. Inflatable collision-protection cushion according to one or more of Claims 1 to 8, characterized in that the collision-protection cushion (4 or 17 or 41 or 42), for accommodation in a receptacle, can be folded several times parallel to the outer edges (14 and 15 or 21 and 22 or 34 and 35) of its impact surfaces (7 and 8 or 18 and 19).

10. Method of manufacturing an inflatable collision-protection cushion according to Patent Claim 1, characterized in that a web (10) of material is used whose width (11) corresponds to the height of the collision-protection cushion (4), in that, for a collision-protection cushion (4) having rectangular outer contours of impact surfaces (7, 8) and lateral surfaces (20, 29), a section having a length (30) is cut from the web (10) of material, which length (30), plus an overlap (47), corresponds to the sum of the widths of the impact surfaces (7, 8) and of the lateral surfaces (20, 29), and in that, after the folding along the fold lines (12), first of all the one longitudinal seam (16), preferably lying in the area of the front impact surface (8), is made and then the upper and lower transverse seams (14, 15) are made.

11. Method of manufacturing an inflatable collision-protection cushion according to Patent Claim 1, characterized in that, for a collision-protection cushion (17) having a trapezoidal outer contour of the impact surfaces (18, 19) and rectangular lateral surfaces (31, 32), two trapezoidal sections are cut from the web (10) of material in such a way each section includes an impact surface (18 or 19) as well as a left-side and a right-side lateral surface (31 or 32) in halves, and in that, after the folding along the fold lines (12) and removal of the waste (40), the two sections are placed one above the other in a congruent manner, the two longitudinal seams (16) connecting the lateral surfaces (31 and 32) in halves are made and then the upper and lower transverse seams (14 and 15) are made.

12. Method of manufacturing an inflatable collision-protection cushion according to Patent Claim 1, characterized in that, for a collision-protection cushion (41 or 42) having a trapezoidal outer contour of the impact surfaces (18 and 19) and having lateral surfaces (43 to 46) of different upper and lower widths (B1 to B4), a section having a length (30) is cut from a web (10) of material, which length (30), plus an overlap (47), corresponds approximately to the sum of the average widths of impact and lateral surfaces (18 and 19 or 43 to 46), and in that, after the folding along the fold lines (12) and removal of the waste (40), first of all the one longitudinal seam (16), preferably lying in the area of the front impact surface (18), is made and then the upper and lower transverse seams (14 and 15 resp.) are made.

## Revendications

1. Coussin anti-choc gonflable (4) pour véhicules automobiles, destiné à protéger un occupant du véhicule (3) en cas de collision entre le véhicule et un obstacle, le coussin anti-choc présentant, dans une position de repos dans laquelle il est étalé à plat, une forme rectangulaire avec des surfaces d'impact (7, 8) mutuellement coïncidentes, caractérisé en ce que les surfaces d'impact (7 et 8 ou 18 et 19) sont reliées, au niveau de leurs deux arêtes latérales (21 et 22 ou 34 et 35) s'étendant à peu près dans la direction du gonflement, par des surfaces latérales (20 et 29, 31 et 32 ou 43–46) qui sont pliées vers l'intérieur entre les surfaces d'impact (7 et 8 ou 34 et 35) et dont les bords libres sont assemblés en commun avec les deux arêtes (14 et 15) s'étendant à peu près perpendiculairement à la direction de gonflement.

2. Coussin anti-choc gonflable selon la revendication 1, caractérisé en ce que ces surfaces d'impact (7 et 8) et ces surfaces latérales (20 et 29) présentent des contours extérieurs rectanculaires.

3. Coussin anti-choc gonflable selon la revendication 1, caractérisé en ce que ses surfaces d'impact (18, 19) présentent un contour extérieur trapézoïdal.

4. Coussin anti-choc gonflable selon la revendication 3, caractérisé en ce que les surfaces latérales (31, 32) sont rectangulaires et se composent chacune de deux demi-surfaces latérales unies au moyen de coutures longitudinales (16).

5. Coussin anti-choc gonflable selon la revendication 3, caractérisé en ce que les surfaces latérales (43 et 46) présentent, en haut et en bas, des largeurs différentes (B1 à B4).

6. Coussin anti-choc gonflable selon la revendication 5, caractérisé en ce que les lignes de pliage (12) des surfaces latérales (43 et 44) convergent au niveau d'une arête inférieure (15), ce qui fait que leur largeur du bas (B2) tend vers zéro.

7. Coussin anti-choc gonflable selon la revendication 2, caractérisé en ce que les surfaces latérales gauche et droite (21, 29) ont des largeurs différentes.

8. Coussin anti-choc gonflable selon la revendication 2, caractérisé en ce que la hauteur des surfaces d'impact (5 et 8) correspond à la largeur (11) d'une nappe de tissu (10) utilisée pour leur confection.

9. Coussin anti-choc gonflable selon l'une quelconque des revendications 1 à 8, caractérisé en ce qu'afin d'être placé dans un récipient, le coussin anti-choc (4 ou 17 ou 41 ou 42) peut être plié plusieurs fois parallèlement aux arêtes extérieures (14 et 15, 21 et 22 ou 34 et 35) de ses surfaces d'impact (7 et 8 ou 18 et 19).

10. Procédé de fabrication d'un coussin anti-choc gonflable selon la revendication 1, caractérisé en ce qu'on utilise une nappe de tissu (10) dont la largeur (11) correspond à la hauteur du coussin antichoc, en ce que pour un coussin anti-choc (4) à contours extérieurs rectangulaires des surfaces d'impact (7, 8) et des surfaces latérales (20, 29), cn coupe dans la nappe de tissu (20) un coupon ayant une longueur (30) qui, en plus d'un recouvrement (47), correspond à la somme des largeurs des surfaces d'impact (7, 8) et des surfaces latérales (20, 29), et en ce qu'après le pliage suivant les lignes de pliage (12), on exécute tout d'abord une couture longitudinale (16) située de préférence au niveau de la surface d'impact (8), puis les coutures transversales supérieure et inférieure (14, 15).

11. Procédé de fabrication d'un coussin anti-choc gonflable selon la revendication 1, caractérisé en ce que pour un coussin anti-choc (17) à contour extérieur trapezoïdal des surfaces d'impact (18, 19) et à surfaces latérales rectangulaires (31, 32), on coupe dans la nappe de tissu (10) deux coupons trapézoïdaux de telle manière que chaque coupon comprenne une surface d'impact (18 ou 19) ainsi qu'une demi-surface latérale à gauche et à droite (31 ou 33), et en ce qu'après le pliage suivant les lignes de pliage (12) et l'enlèvement des découpures (40) des deux coupons placés l'un sur l'autre de manière à coïncider, on exécute les deux coutures longitudinales (16) qui assemblent les demi-surfaces latérales (31 et 32), puis les coutures transversales supérieure et inférieure (14 et 15).

12. Procédé de fabrication d'un coussin anti-choc gonflable selon la revendication 1, caractérisé en ce que pour un coussin anti-choc (41 ou 42) à contour extérieur trapézoïdal des surfaces d'impact (18 ou 19) et à surfaces latérales (43 à 46) de largeurs différentes en haut et en bas (81 à 84), on coupe dans une nappe de tissu (10) un coupon ayant une longueur (30) qui, en plus d'un recouvrement (47), correspond à peu près à la somme des largeurs moyennes des surfaces d'impact et des surfaces latérales (18, 19 et 43 à 46), et en ce qu'après le pliage suivant les lignes de pliage (12) et l'enlèvement des découpures (40), on exécute tout d'abord la couture longitudinale (16) située de préférence au niveau de la surface d'impact avant (18), puis les coutures transversales supérieure et inférieure (14 et 15).

Fig.1

EP 0 229 905 B1

EP 0 229 905 B1

**Fig.2**

**Fig.3**

**Fig.4**

**Fig.5**

Fig.6

Fig.7

Fig.8

Fig.9